# EUROPEAN PATENT APPLICATION

(11) **EP 1 553 521 A1**
(43) Date of publication of application: **13.07.2005**
(21) Application number: 03756628.8
(22) Date of filing: 15.10.2003
(51) Int. Cl.: G06T 3/00, H04N 1/387, H04N 5/232, H04N 5/265

(54) **PANORAMA SYNTHESIS PROCESSING OF A PLURALITY OF IMAGE DATA**

(30) Priority: 15.10.2002 JP 2002299772
(71) Applicant: Seiko Epson Corporation, Shinjuku-ku, Tokyo 163-0811 (JP)
(72) Inventor: OUCHI, Makoto, Suwa-shi, Nagano 392-8502 (JP)
(74) Representative: Winter, Brandl, Fürniss, Hübner, Röss, Kaiser, Polte Partnerschaft Patent- und Rechtsanwaltskanzlei
(86) International application number: PCT/JP2003/013217
(87) International publication number: WO 2004/036498

(57) **Abstract**

This invention is an image processing apparatus for generating graphics data representing a single seamless planar image synthesized from a multiple sets of graphics data contained in a plurality of graphics files. Each of the plurality of graphics files contains graphics data composed of a multiplicity of planar pixels arrayed in a plane to create a planar image. This image processing apparatus establishes a spheroidal or cylindrical projection plane for synthesis of the multiple sets of graphics data.

## Description

### TECHNICAL FIELD

The present invention relates to image processing technology for seaming together multiple data representing an image.

### BACKGROUND ART

In recent years, it has become common practice to capture photos using a digital still camera (DSC), and to then store the graphics data representing the photos on a computer. A process termed panorama synthesis, in which data for multiple images is synthesized to produce graphics data representing a single seamless image is sometimes carried out as well.

However, images generated by a digital still camera have some distortion, particularly in peripheral edge portions. This distortion can create the problem of degraded image quality in image areas that are seamed together when synthesizing multiple images. One cause of this distortion is that light entering through the optical system of the digital camera is projected onto an image pickup device having a flat photoreceptor su rface.

### DISCLOSURE OF THE INVENTION

With the foregoing in view, it is an object of the present invention to provide technology that overcomes the aforementioned drawbacks of the conventional art, by controlling image degradation produced in the process of synthesizing data for multiple images generated using a flat image pickup device.

In order to attain the above and the other objects of the present invention, there is provided the first configuration of image processing apparatus for generating graphics data representing a single seamless planar image synthesized from a multiple sets of graphics data contained in a plurality of graphics files, in response to the plurality of graphics files each of which contains the graphics data composed of a multi plicity of planar pixels arrayed in a plane for representing a planar image. The image processing apparatus comprising a synthesis area establisher configured to establish a spheroidal projection plane centered on a predetermined point, as an area for synthesis of the multiple sets of graphics data; a spheroidal image generator configured to generate a plurality of spheroidal images, by projecting each of planar images represented by each of the multiple sets of graphics data onto the projection plane; a feature point extractor configured to extract a feature point which is an area having a predetermined characteristic, from each of the plurality of spheroidal images; a correspondence relationship determiner configured to determine a correspondence relation ship of the extracted feature points , between the plurality of spheroidal images; a spheroidal image synthesizer configured to generate seamless spheroidal graphics data representing a single seamless spheroidal image , by synthesizing a plurality of graphics data each of which representing each of the spheroidal images, with reference to the determined correspondence relationship; and a planar image generator configured to generate the graphics data representing the single seamless planar image , from the seamless spheroidal image graphics data.

According to this first configuration of the invention, a spheroidal projection plane centered on a predetermined point is established as an area for synthesizing the multiple graphics data, and planar images representing data for each of the multiplicity of images are projected onto the established projection plane in order to generate a multiplicity of spheroidal images, which spheroidal images are then synthesized. According to this aspect, since images are synthesized on a spheroidal projection plane, it is possible to control degradation in image quality produced in the process of synthesizing data for multiple images generated using a flat image pickup device.

In the image processing apparatus of the present in vention, the plurality of graphics files may further include image attribute information which is attribute information of the graphics data. The image processing apparatus may further comprise a focal distance determiner configured to determine a focal distance of an optical system used to generate the multiple sets of graphics data for each of the multiple set of graphics data, in response to the image attribute information; and the spheroidal image generator generates the plurality of spheroidal images by projecting each planar image represented by each of the multiple sets of graphics data onto the projection plane, the each planar images being placed at a location away from the predetermined point to the projection plane side, by the focal distance corresponding to each of the multiple sets of graphics data.

By so doing, it is possible to carry out panorama synthesis even where the data for a multiplicity of images has been created at different magnification by means of using the zoom function during s hooting, for example.

In the image processing apparatus of the present invention, the image attribute information may include lens focal distance representing focal distance of a shooting lens; focal plane resolution unit specifying an unit of resolution in a focal plane of the optical system; focal plane height resolution representing a pixel count in a pixel height direction per the focal plane resolution unit; and focal plane width resolution representing a pixel count in a pixel width direction per the focal plane resolution unit; the focal distance determiner determines the lens focal distance to be the focal distance; and the spheroidal image generator determines a pixel size in a width direction by means of dividing the focal plane resolution unit by focal plane width resolution, and also determines a pixel size in a height direction by means of dividing the focal plane resolution unit by the focal plane height resolution.

In the image processing apparatus of the present invention, the image attribute information may include 35 mm-equivalent lens focal distance which is a value of focal distance converted to a 35 mm film camera basis. The focal distance determiner may determine the 35 mm-equivalent lens focal distance to be the focal distance. The spheroidal image generator may determine 35 mm film size as a size of the planar image.

In the preferred image processing apparatus of the present invention, the image attribute information includes focal plane resolution unit specifying an unit of resolution in a focal plane of the optical system; focal plane height resolution representing a pixel count in a pixel height direction per the focal plane resolution unit; and focal plane width resolution representing a pixel count in a pixel width direction per the focal plane resolution unit. The spheroidal image generator comprises: a spheroidal pixel establisher configured to establish spheroidal pixels on the spheroidal projection plane, the spheroidal pixel being allocated in a height direction by an angle divided by a largest one of the determined focal distances and the focal plane height resolution, and being allocated in a width direction by an angle divided by the largest determined focal distance and the focal plane width resolution; and a spheroidal pixel value determiner configured to determine each pixel value for each of the spheroidal pixel s, according to a pixel value of a planar pixel projected onto each of the spheroidal pixels.

In this way, by establishing spheroidal pixels on the basis of th e largest one among the determined focal point distances, it becomes possible to carry out panorama synthesis without reducing the amount of information of planar images having the smallest pixels, and without including an excessive amount of information i n the spheroidal images generated from the planar images.

The second configuration of the invention is an image processing apparatus for generating graphics data representing a single seamless planar image synthesized from a multiple sets of graphics data contained in a plurality of graphics files, in response to the plurality of graphics files each of which contain s the graphics data composed of a multiplicity of planar pixels arrayed in a plane for representing a planar image. The image processing appar atus comprises: a synthesis area establisher configured to establish a cylindrical projection plane centered on a predetermined axis, as an area for synthesis of the multiple sets of graphics data; a cylindrical image generator configured to generate a plurality of cylindrical images, by projecting each of planar images represented by each of the multiple sets of graphics data onto the projection plane; a feature point extractor configured to extract a feature point which is an area having a predetermined characteristic, from each of the plurality of cylindrical images; a correspondence relationship determiner configured to determine a correspondence relationship of the extracted feature points, between the plurality of cylindrical images; a cylindrical image synthesizer configured to generate seamless cylindrical graphics data representing a single seamless cylindrical image, by synthesizing a plurality of graphics data each of which representing each of the cylindrical images, with reference to the determin ed correspondence relationship; and a planar image generator configured to generate the graphics data representing the single seamless planar image , from the seamless cylindrical image graphics data.

In the preferred image processing apparatus of the pres ent invention, the cylindrical image generator establishes the axis parallel to the height direction established in the graphics data.

By so doing, it is possible to reduce image distortion of in the lateral direction of images during the panorama synthesis process, which typically involves seaming together in the lateral direction.

The technique of the present invention is actualized by a variety of applications, which include image processing methods, computer programs that attain the functions of such apparatuses and methods, recording media in which such computer programs are recorded, and data signals that include such computer programs and are embodied in carrier waves.

### BRIEF DESCRIPTION OF THE DRAWINGS

FIG. 1 is an illustration showing an image pr ocessing system as an embodiment of the invention.
FIG. 2 is a block diagram showing a simplified arrangement of a digital still camera as the input apparatus for generating graphics data.
FIG. 3 is a block diagram showing a simplified arrangement of a computer PC and a color printer as output apparatus for outputting graphics data.
FIG. 4 is an illustration showing a simplified arrangement of graphics file GF structure in the embodiment of the invention.
FIG. 5 is an illustration showing an example of attribute information stored in the Exif IFG of a graphics file GF.
FIG. 6 is a flowchart showing the processing routine of the panorama synthesis process in a computer PC.
FIGS. 7(a) and 7(b) are illustrations depicting the positional relationship betwe en planar RGD data and a cylindrical coordinate system.
FIG. 8 is an illustration showing the processing routine of the coordinate conversion process in the first embodiment of the invention.
FIGS. 9(a) and 9(b) are illustrations depicting the positional relationship between planar RGB data and the projection plane CYL, viewed from the axis Caxis direction.
FIG. 10 is an illustration showing distortion of an image produced during generation of graphics data using a planar image pickup device.
FIG. 11 is an illustration depicting the relationship between planar RGB data and a spheroidal coordinate system.
FIGS. 12(a), 12(b), and 12(c) are illustrations depicting generation of two sets of cylindrical graphics data having the same focal distance from the s cene.
FIGS. 13(a), 13(b), and 13(c) are illustrations depicting feature points extracted from each set of cylindrical graphics data.
FIG. 14 is an illustration showing a corresponding point search process being carried out.
FIGS. 15(a) and 15(b) are ill ustrations giving a description of the synthesis process.
FIGS. 16(a), 16(b), and 16(c) are illustrations depicting graphics data representing a single seamless image being generated from two sets of graphics data having different focal distances.
FIG. 17 is an illustration depicting generation of two sets of cylindrical graphics data from two sets of graphics data having different focal distances.

### BEST MODE FOR CARRYING OUT THE INVENTION

The following description of the best mode for carrying out the invention on the basis of embodiments shall be made in the order indicated below.
A. Arrangement of Image Processing System :
B. Arrangement of Image File :
C. Panorama Synthesis Process in the first embodiment:
D. Panorama Synthesis Process in the second embodiment:
E. Variations:

### A. Arrangement of Image Processing System :

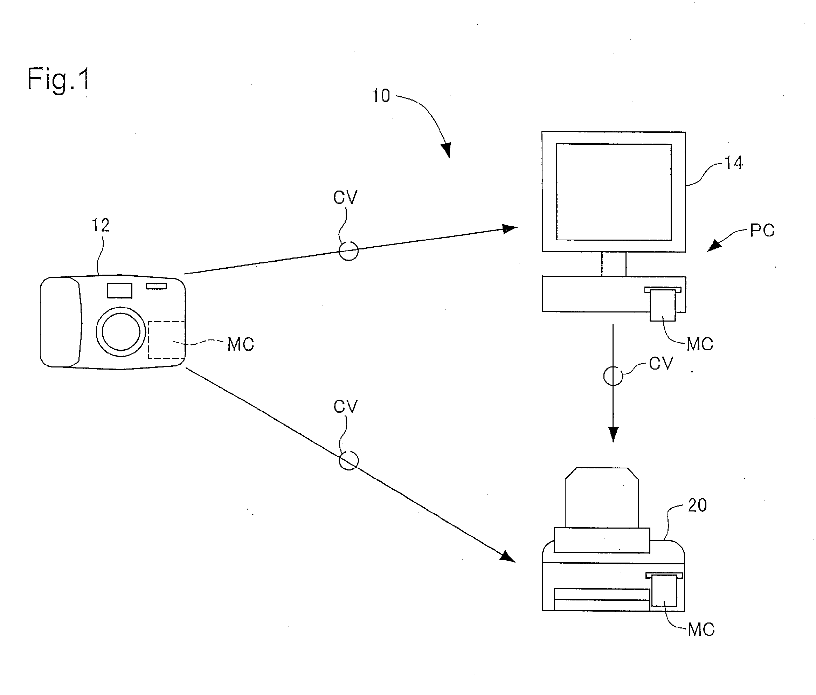

Fig. 1 illustrates an image processing system 10 in one embodiment of the invention. The image processing system 10 includes a digital still camera 12 functioning as an input device that generates original image data, a personal computer PC functioning as an image processing device that performs image processing of the original image data generated by the digital still camera 12, and a color printer 20 functioning as an output device th at outputs processed images.

The digital still camera 12, the personal computer PC, and the color printer 20 are mutually connectable via a cable CV. In the state of connection by the cable CV, the digital still camera 12 and the other constituents are allowed to transmit and receive image files via the cable CV. In the status of no connection by the cable CV, the digital still camera 12 and the other constituents are allowed to transmit image files therebetween via a memory card MC.

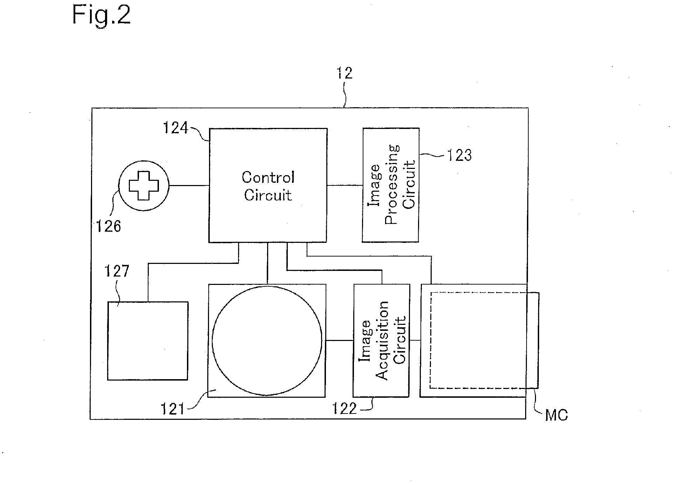

Fig. 2 is a block diagram schematically illustrating the structure of the digital still camera 12 working as the input device of generating image data. The digital still camera 12 focuses an image through an optical lens on a charge coupled device (CCD) so as to electrically record a still image.

The digital still camera 12 includes an optical circuit 121 having a CCD that converts optical signals into electrical signals, an image acquisition circuit 122 that controls the optical circuit 121 to acquire image data, an image processing circuit 123 that processes the acquired image data, and a control circuit 124 that controls these respective circuits. The digital still camera 12 further has a selection/decision button 126 as a user interface and a liquid crystal display 127 used for preview of photographed images and user interfaces.

The shooting process (graphics data capture process) by the digital still camera 12 is carried out in the order: (1) setting of shooting mode by the user; (2) shooting (input of graphics data); (3) image processing; and (4) recording of graphics file. Shooting mode setting includes setting of lens focal distance. Setting of lens focal distance is carried out by exchanging lenses (not shown) or manipulating a zoom lens (not shown).

The photographing is performed by pressing a shutter button by the user. In response to the press of the shutter button, the photographing is performed with a focal distance available by the lens equipped with the digital still camera 12. For example, when photographed with a zoom lens providing a variable focal distance in response to the user operation, the photographing and the original image data generation are performed with an adjusted focal distance.

The original image data thus generated are subjected to image processing for storage. This image processing is a pre -treatment of the original image data, prior to storage into the memory card MC. The general procedure converts the original image data into a JPEG format suitable for storage of photographic images. After conversion into the JPEG format, the procedure adds photographing information PI to the converted image data to create an image file.

The photographing information PI regards photographing conditions and includes information representing the sele cted light metering. The process of acquiring image data in the digital still camera 12 terminates with recording of the image file into the memory card MC. The structure of the image file will be discussed later.

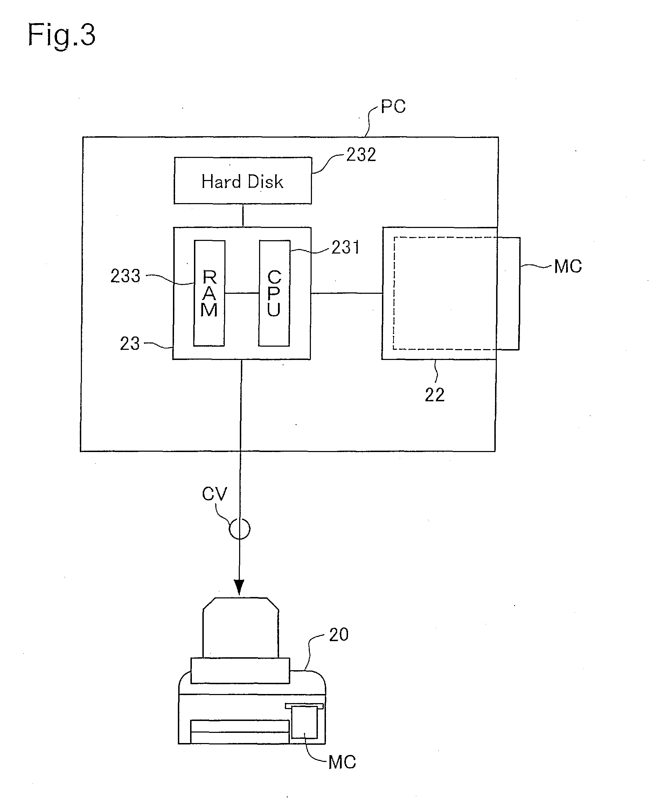

Fig. 3 is a block diagram schematically showing the configuration of the computer PC and the color printer 20 as the output device of outputting image data. The computer PC has a slot 22 for reading an image file from the memory card MC inserted therein and a print data generation circuit 23 for generating print data, according to which the color printer 20 carries out printing. The print data generation circuit 23 includes a central processing unit (CPU) 231 that executes arithmetic operations for generation of print data, a hard disk 232 tha t stores programs executed by the CPU 231, results of the arithmetic operations by the CPU 231, and other data, and a random access memory (RAM) 233 that temporarily stores these programs and data.

The color printer 20 is capable of outputting color image s. One typical example of the color printer 20 is an ink jet printer that ejects four different color inks, cyan (C), magenta (M), yellow (Y), and black (K) on a printing medium to form a dot pattern and thereby complete a printed image.

### B. Arrangement of Image File:

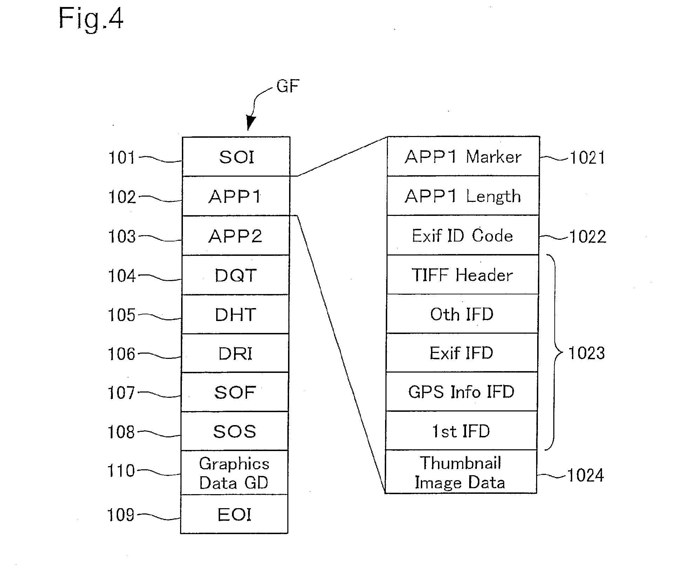

Fig. 4 schematically shows the structure of an image file GF in the embodiment of the invention. The image file GF has a file structure in conformity with Exchangeable image file format (Exif) for digital still cameras. This format is spec ified by Japan Electronics and Information Technology Industries Association (JEITA). According to this format, JPEG -Exif files that store compressed JPEG data as image data are included in Exif files (files of the Exif format).

The image file GF include s an SOI marker segment 101 representing a header of compressed data, an APP1 marker segment 102 storing attribute information of the Exif format, an APP2 marker segment 103 storing Exif extended data, a DQT marker segment 104 defining a quantization table, a DHT marker segment 105 defining a Huffman table, a DRI marker segment 106 defining an insertion interval of a restart marker, an SOF marker segment 107 representing various parameters relating to frames, an SOS marker segment 108 representing various parameters relating to scanning, an EOI marker segment 109 representing a termination of the compressed data, and an image data storage area 110.

The APP1 marker segment 102 stores an APP1 marker 1021, an Exif identification code 1022, a TIFF header and other attribute information 1023, and thumbnail image data 1024. The attribute information 1023 has a TIFF structure with a file header (TIFF header) and includes, in the case of an Exif-JPEG file, 0^{th} IFD storing attribute information relating to compressed image data, Exif IFD storing the photographing information PI and other attribute information inherent to the Exif format and 1^{st} IFD storing attribute information relating to thumbnail images. The Exif IFD is pointed by an offset from the TIFF header s tored in the 0^{th} IFD. Tags for identifying various pieces of information are used in the IFD, and the respective pieces of information may be referred to as tag names.

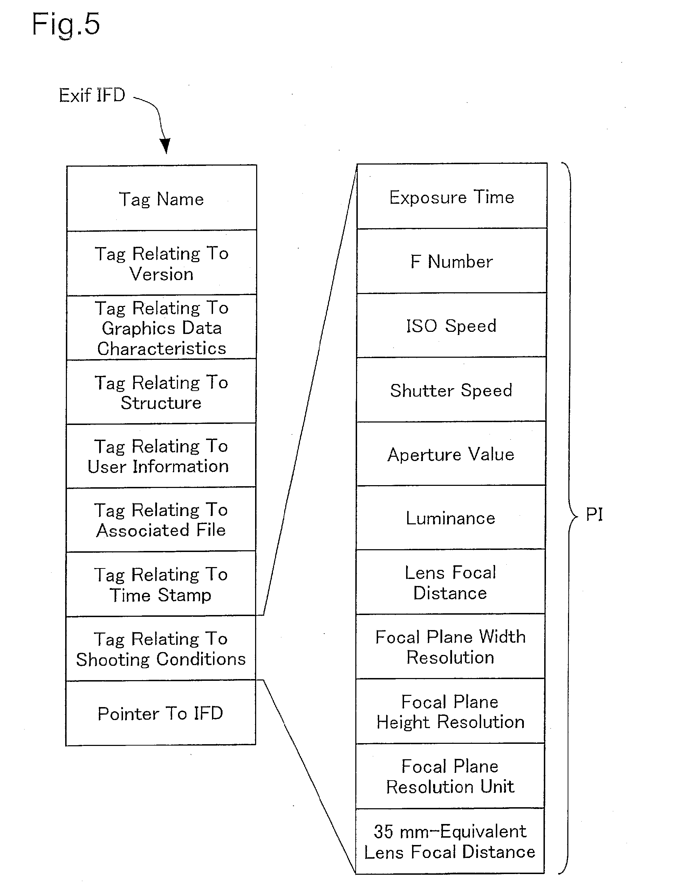

FIG. 5 is an illustration showing an example of attribute information stored in the Ex if IFG of a graphics file GF. The attribute information includes tags of various kinds, including a tag relating to version and tags relating to shooting conditions. Tags relating to shooting conditions store exposure time, lens F stop, ISO sensitivity, shutter speed, aperture, luminance, lens focal distance, focal plane width resolution, focal plane height resolution, focal plane resolution unit, 35 mm-equivalent lens focal distance, and other parameters, stored as shooting information PI in accordance with predetermined offset. Recording of the shooting information PI is carried out during shooting by the digital still camera 12, as described previously .

### C. Panorama Synthesis Process in the first embodiment:

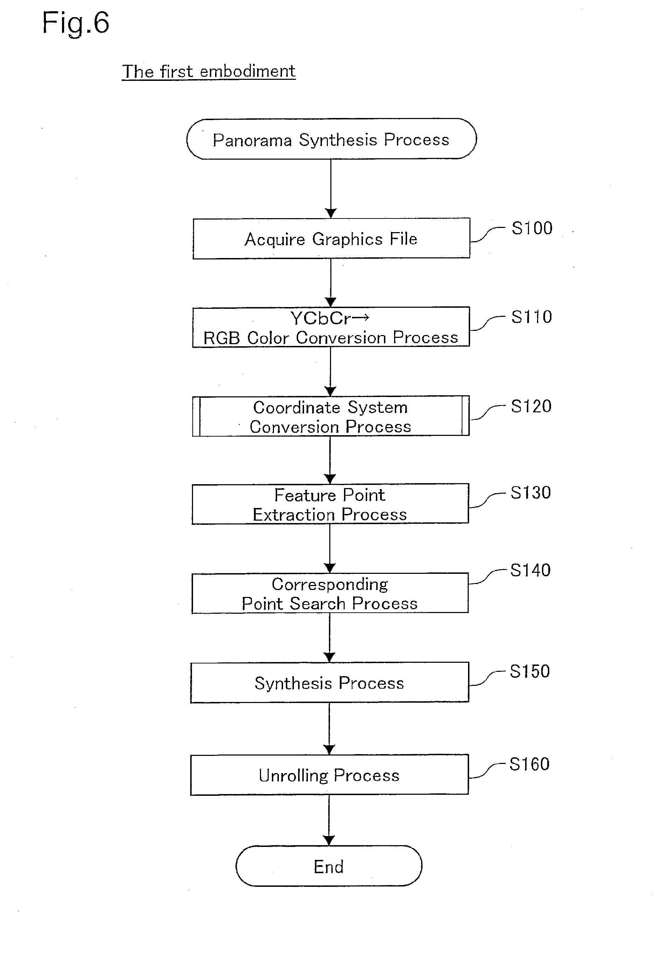

FIG. 6 is a flowchart showing the processing routine of the panorama synthesis process in a computer PC. In Step S100, the CPU 231 reads the graphics file GF from the memory card MC which has been inserted into the slot 22, and stores this in the RAM 233 belonging to the print data generating circ uit 23. The graphics file GF stores graphics data in the JPEG file format as the graphics data GD. Graphics data in the JPEG file format is composed of compressed YCbCr data.

In Step S110, the CPU 231 performs a color conversion process after having expanded the compressed YCbCr data. By means of this color conversion process, the YCbCr data is converted to RGB data. The reason for conversion to RGB data is that RGB data is used in image processing in the personal computer PC and in the color printer 2 0. Both the RGB and the YCbCr data take the form of planar images composed of a plurality of pixels in a plane (herein also termed planar pixels) arrayed on a plane.

In Step S120, the CPU 231 performs a coordinate conversion process on the RGB data. This coordinate conversion process is specifically a process in which the RGB data, which is a planar image, is projected onto a cylindrical surface positioned in a cylindrical coordinate system, to generate graphics data on a cylindrical surface. Hereinafter, graphics data generated in this way shall be referred to as cylindrical RGB data, and RGB data composed as a planar image shall be referred to as planar RGB data.

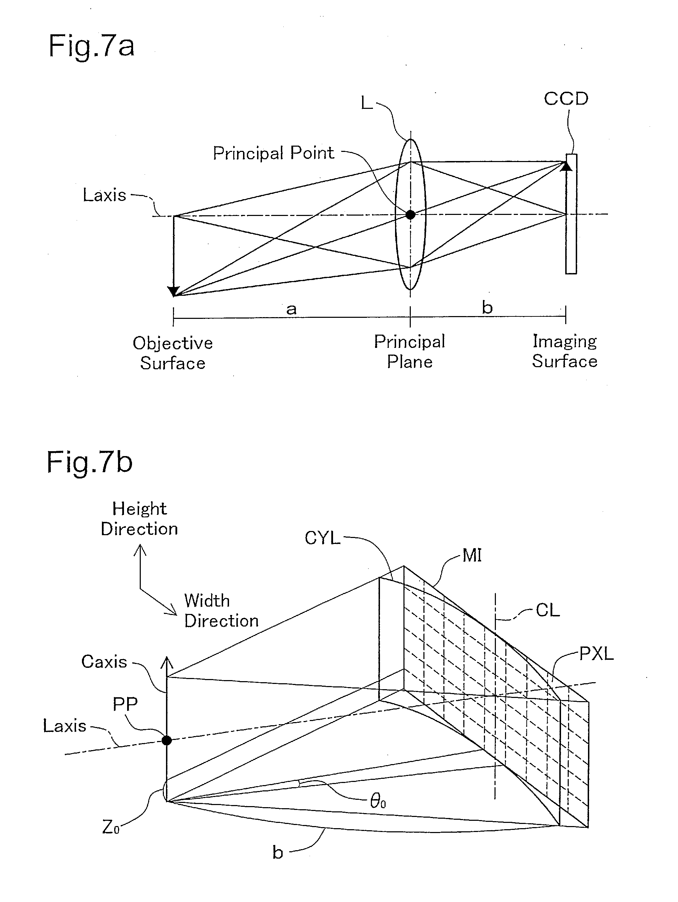

FIGS. 7(a) and 7(b) are illustrations depicting the positional relationship between pla nar RGD data MI and a projection plane CYL in a cylindrical coordinate system. FIG. 7(a) depicts the positional relationship between the optical system and the image pickup device of the digital still camera 12. The optical system is shown as a lens L. The image pickup device is composed as a CCD (Charge-Coupled Apparatus) having a flat photoreceptor surface.

The lens L replaces the several lenses of the digital still camera 12 optical system with a single lens having the same effect. The center of the lens L is termed the principal point, and the plane passing through the principal point and perpendicular to the optical axis Laxis is termed the principal plane. As regards the lens L, there are defined a n objective surface indicating a subject, and an imaging surface which focuses light from the subject. The objective surface and the imaging surface are defined as being situated spaced apart from the principal plane in the optical direction, by an objective surface distance *a* and an imaging surface distance b, respectively.

The image pickup device is positioned with its photoreceptor surface aligned with this imaging surface. By means of this arrangement, light from the subject on the objective surface passes through the lens L and is focused on the photoreceptor surface of the image pickup device.

FIG. 7(b) depicts the planar RGB data MI being projected onto the projection plane CYL. Since the planar RGB data MI is graphics data that has been generated using the image pickup device, pixel values of the planar pixels PXL thereof are values that originally were generated depending on light incident on the image pickup pixels disposed on the imaging surface.

The projection plane CYL is established as part of a cylindrical surface which is a collection of a plurality of points situated away by imaging surface distance b from the axis Caxis of the cylindrical coordinate system. The axis Caxis is an axis that passes through a point PP corresponding to the principal point of FIG. 7(a) and extends in the vertical direction of the planar RGB data MI. It will be understood that the imaging surface distance b substantially corresponds to lens focal distance. The value stored in the Exif IFD of the graphics file GF (FIG. 5) can be used as lens focal distance. By so doing, a cylindrical image having a plurality of cylindrical pixels defined by the size Z₀ in the Caxis direction and the angle θ₀ can be constructed on the projection plane CYL.

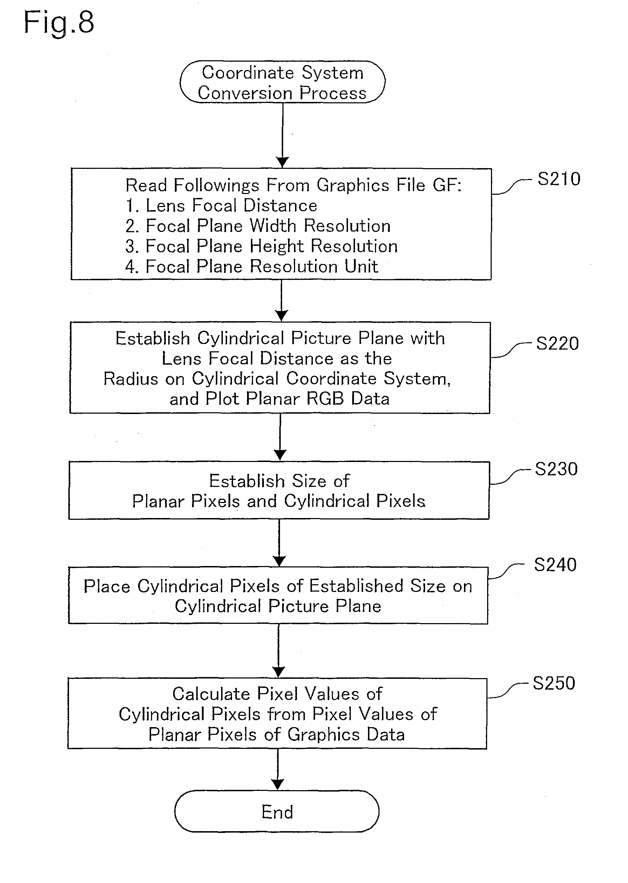

FIG. 8 is an illustration showing the processing routine of the coo rdinate conversion process in the first embodiment of the invention. In Step S210, the CPU 231 reads out from the graphics file GF data for use in the coordinate conversion process. Data for use in the coordinate conversion process includes lens focal di stance, focal plane resolution unit, resolution of focal plane width, and resolution of focal plane height. Lens focal distance refers to the actual focal distance of the shooting lens; as noted, it substantially corresponds to the distance from the center of a hypothetic single convex lens to the image pickup device where the light is focused.

Focal plane resolution unit specifies the unit for measuring resolution of the width of the focal plane and resolution of the height of the focal plane. Resolution of focal plane width represents the number of pixels in the image width direction per unit of focal plane resolution. Resolution of focal plane height represents the number of pixels in the image height direction per unit of focal plane resolution. Her e, focal plane refers to the imaging plane in which light from the subject focuses; as noted, it is aligned with the photoreceptor surface of the image pickup device.

In Step S220, the CPU 231 performs the following processes.
(1) The cylindrical coordin ate system shown in FIG. 7(b) is defined.
(2) A cylindrical surface centered on the axis Caxis of the cylindrical coordinate system is established on the cylindrical coordinate system. In this embodiment, to facilitate understanding, lens focal distance is deemed the constant distance mentioned previously.
(3) Planar RGB data is placed at a predetermined location on the cylindrical coordinate system.

Placement of the planar RGB data is carried out at a location situated away, by the equivalent of the lens focal distance, from the axis Caxis, and with an orientation such that the centerline CL extending in the height direction of the planar RGB data parallel with the axis Caxis. The reason for placing the data so that the centerline CL extending in the h eight direction of the planar RGB data parallel with the axis Caxis is in order to control distortion of the image in the image lateral direction in the panorama synthesis process, which typically involves seaming together images in the lateral direction.

In Step S230, the CPU 231 determines the size of the planar pixels of the planar RGB data, and the size of the cylindrical pixels on the projection plane CYL. With regard to the planar pixel size, specifically, pixel size in the width direction can be de termined by dividing the focal plane resolution unit by the resolution of focal plane width, and pixel size in the height direction by dividing the focal plane resolution unit by the resolution of focal plane height. The planar pixel size determined in th is way will correspond to image pickup device pixel size, in the event that there no resampling of data obtained from the image pickup device.

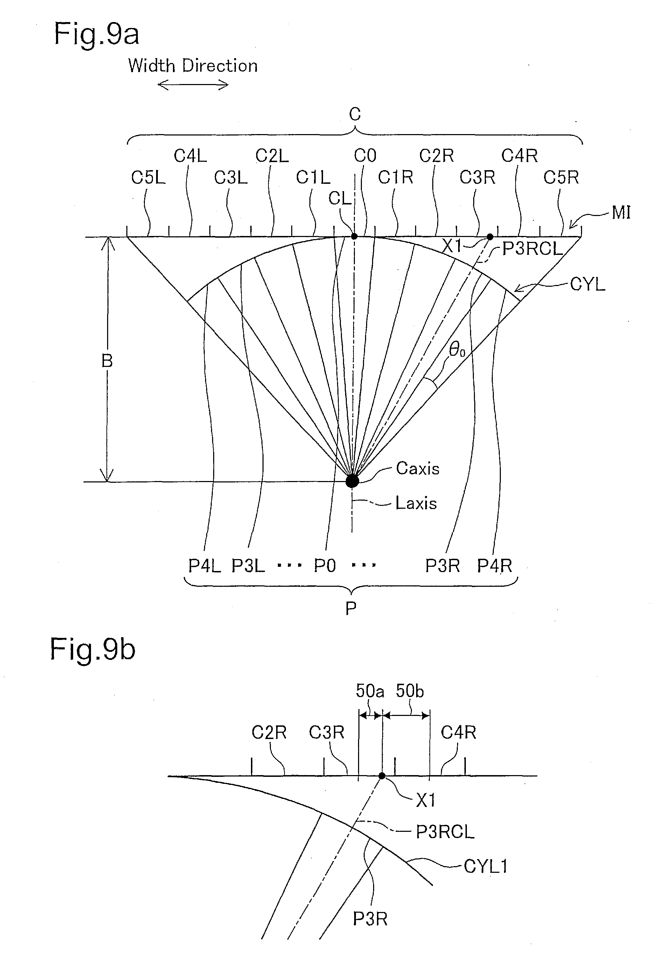

FIGS. 9(a) and 9(b) are illustrations depicting the positional relationship between planar RGB data and the projection plane CYL, viewed from the axis Caxis direction. FIG. 9(a) shows FIG. 7(b) viewed from above. FIG. 9(b) is a partial enlarged view of FIG. 9(a). In FIG. 9(a), a plurality of planar pixel rows C are shown in the planar RGB data MI. A planar pixel row C is a pixel row composed of a plurality of planar pixels lined up in the vertical direction in the planar RGB data MI. In FIG. 9(a) there are shown 11 planar pixel rows, from planar pixel row C5L to planar pixel row C5R. The planar pixels contained in each planar pixel row all have the same height Z₀ (in the axis Caxis direction).

In FIG. 9(a) there is also shown a plurality of cylindrical pixel rows P within the projection plane CYL. A cylindrical pixel row P is a pixel row composed of a plurality of planar pixels lined up in the height direction in the projection plane CYL. In FIG. 9(a) there are shown 9 cylindrical pixel rows, from cylindrical pixel row P4L to cylindrical pixel row P4R. All of the cylindrical pixel rows have width of the same given angle θ₀. The cylindrical pixels contained in each cylindrical pixel row all have the same height Z ₀ (not shown).

The angle θ₀ representing cylindrical pixel width is established on the basis of a planar pixel PXL in proximity to the optical axis Laxis. Specifically, a cylindrical pixel row P0 is determined by projecting a planar pixel C0 onto the projection plane CYL, and the angle θ ₀ of the cylindrical pixel row P0 so determined is designated as the angle of the cylindrical pixel rows. By establishing cylindrical pixels (not shown) in this way, it is possible to construct a cylindrical image in the projection plane CYL (Step S240).

In Step S250, the CPU 231 extracts the pixel values of the cylindrical pixels, from the pixels values of the plan ar pixels of the planar RGB data MI. FIG. 9(b) is a partial enlarged view of FIG. 9(a), illustrating the method for extracting pixel values of cylindrical pixels using a bilinear interpolation method. In the extraction example hereinbelow, in order to fa cilitate the description, the RGB data is assumed to be one -dimensional data having only one row of planar pixels in the height direction; however, it could easily be expanded to two -dimensional data by carrying out the same process in the height direction.

In FIG. 9(b) are shown a cylindrical pixel P3R, the centerline P3RCL of the cylindrical pixel P3R, and the projection point X1 of the centerline P3RCL onto the planar RGB data MI. The centerline P3RCL is a line extending from the axis Caxis (FIG. 9(a)) towards the center of the cylindrical pixel P3R.

The pixel value of the cylindrical pixel P3R can be extracted in the following manner, from the pixel values of the planar pixels C3R, C4R. The projection point X1 is projected into the planar pixel C3R, and is situated a distance 50a away from the center location of the planar pixel C3R, and a distance 50b away from the center location of the planar pixel C4R. These distances 50a, 50b can be calculated from the planar RGB data and the lens focal distance by the CPU 231.

Where a bilinear interpolation method is used, the pixel value of the cylindrical pixel P3R can readily be extracted with the calculation equation: ((pixel value of planar pixel C3R x distance 50b + pixel value of planar pixel C4R x distance 50a)/(distance 50 a + distance 50b)). Other calculation methods include the cubic convolution method and other extraction methods. The reason for projecting the planar RGB data MI onto a cylindrical surface prior to synthesis of the graphics data is as follows.

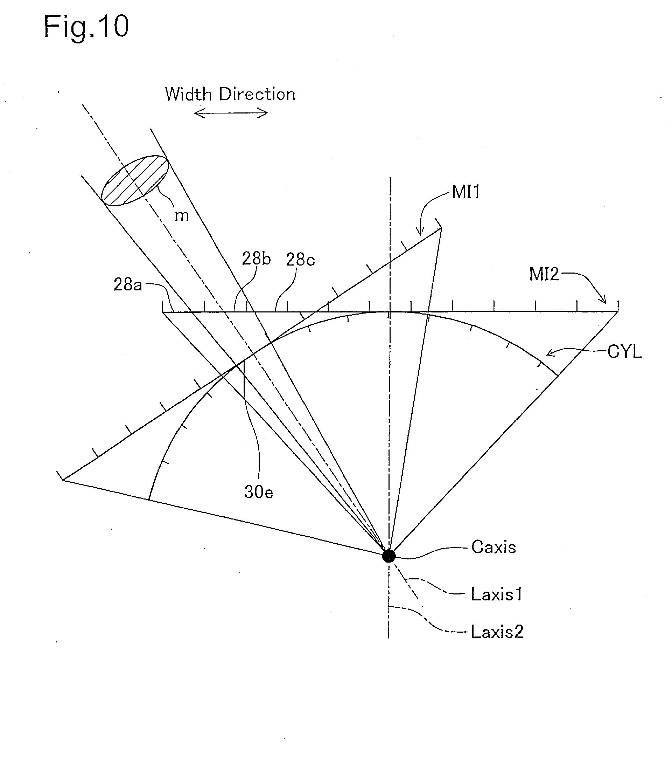

FIG. 10 is an illustration showing distortion of an image produced during generation of graphics data using a planar image pickup device. In the drawing, there are shown two sets of planar RGB data M1, M2 generated by projecting a given subje ct m from the same point, but at separate angles. The two sets of planar RGB data M1, M2 are projected respectively on two optical axes Laxis1, Laxis 2. In the planar RGB data M1, the subject m is positioned in the center portion of the image, whereas in the planar RGB data M1, the subject m is positioned at the left edge of the image.

As will be apparent from FIG. 10, in the planar RGB data M 1 the subject m has apparent size substantially the same as the planar pixel, whereas in the planar RGB data M2 it has apparent size larger than the planar pixel. In this way, the apparent size of the subject m in the planar RGB data will differ depending on the location at which the subject m is positioned in the image. As a result, image distortion occurs.

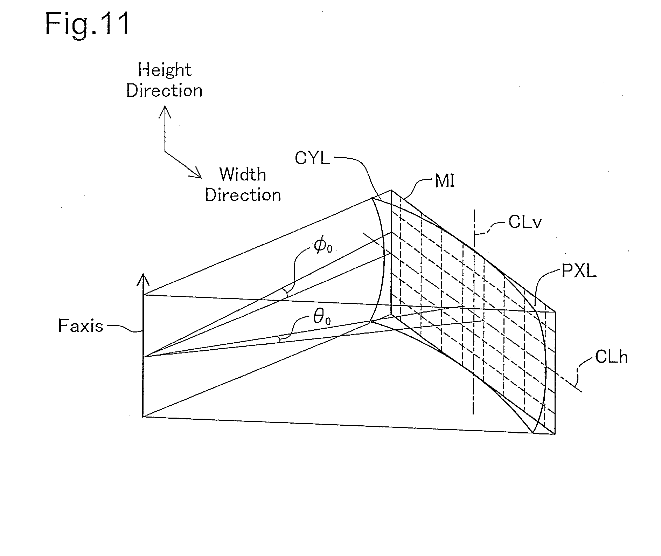

On the other hand, as will be apparent from FIG. 10, in a cylindrical image generated on a cylindrical surface, the apparent size of the subject m will be the same regardless of the location of the subject m on the image. In this way, by means of projecting a planar image onto a cylindrical projection plane to effect conversion to a cylindrical image, it is possible to minimize distortion in the lateral direction. By projecting onto a spheroidal coordinate system in the manner shown in FIG. 11, it becomes possible to minimize distortion in both the height direction and the width direction. Such an arrangement is markedly effective in cases where a multiplicity of images are being synthesized in the height direction.

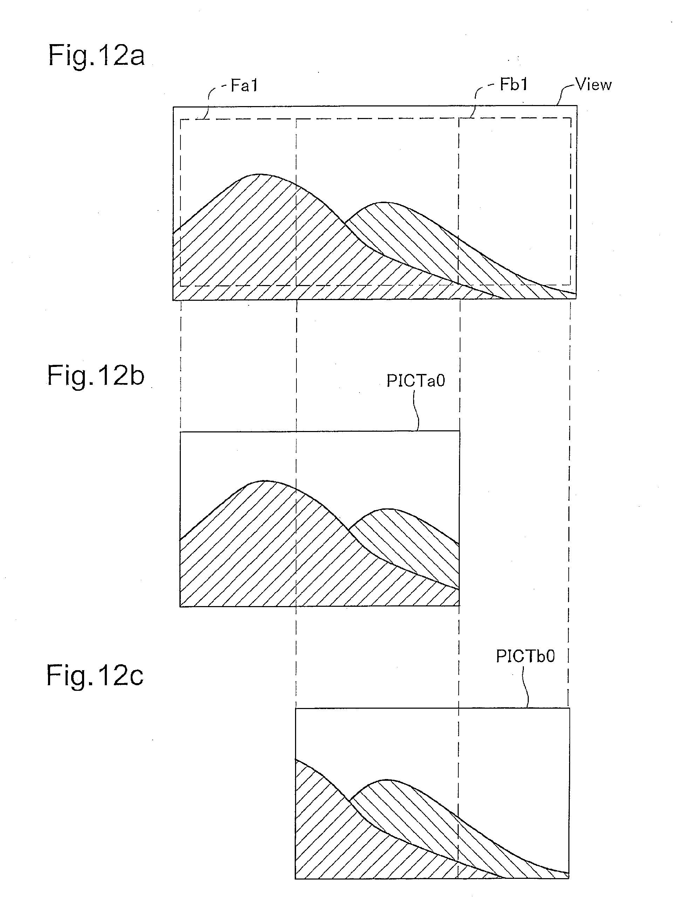

FIG. 12 illustrates generation of two sets of cylindrical graphics data having the same focal distance from a scene View. The two sets of cylindrical graphics data are data generated by means of shooting the two frames Fa1, Fb1 shown in FIG. 12(a). The graphics data shown in FIG. 12(b) has been derived by developing data shot in frame Fa1 and converted to a cylindrical image; the graphics data shown in FIG. 12(c) has been derived by developing data shot in frame Fb1 and converted to a cylindrical image.

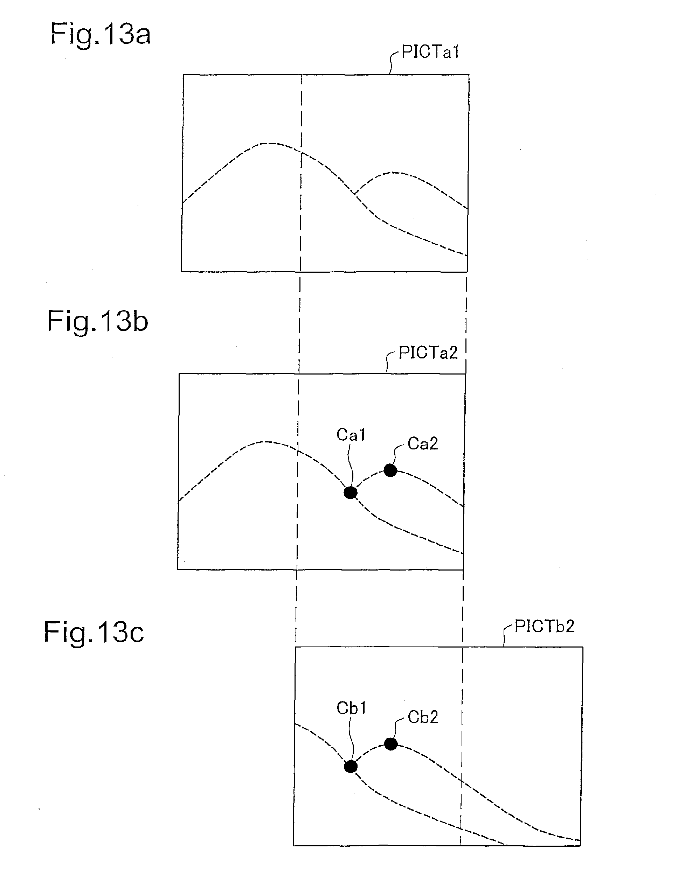

In Step S130, the CPU 231 carries out a feature point extraction process on the two sets of cylindrical image data. The feature point extraction process is a process for extracting feature points that well represent an external characteristic of a subject in an image. FIGS. 13(a), 13(b), and 13(c) are illustrations depicting feature points extracted from each set of cylindrical graphics data. Each feature point need not have size equivalent to one pixel, but may be an area composed of several pixels.

The feature point extraction process may be carried out by the following method, for example. First, the CPU 231 extracts the contour line as a collection of points, using a Sobel filter or other contour line extraction filter. FIG. 13(a) shows contour line data PICTa1 generated by performing a con tour line extraction process on cylindrical image data PICTa0 (FIG. 12(b)).

Next, the CPU 231, using an SRA (Side effect resampling Algorithm) or other resampling algorithm, extracts a feature point from the collection of points making up the extracted contour line. FIG. 13(b) shows feature point data PICTa2 generated by performing a feature point extraction process on contour line data PICTa1. FIG. 13(c) shows feature point data PICTb2 generated by performing a feature point extraction process on contour line data PICTb1 (not shown).

The feature point data PICTa2 includes two feature points Ca1, Ca2, and the feature point data PICTb2 includes two feature points Cb1, Cb2. In FIG. 13(b) and FIGB. 13(c), contour lines are shown overlapped to facilitate understanding.

In Step S140, the CPU 231 performs a corresponding point search process on two sets of feature point data PICTa2, PICTb2. The corresponding point search process is a process that searches for features points that correspond to one another am ong multiple images. This process is a process for determining a given location in a given subject among multiple sets of graphics data targeted for panorama synthesis.

The corresponding point search process can be carried out by means of searching for a collection of a plurality of feature points that meet the following criteria, for example.
(1) Pixels surrounding a feature point (e.g. 3 x 3 pixels) have pixel value differences within a predetermined threshold value. Feature points associated in this w ay are termed approximate feature points.
(2) In each set of feature point data, a plurality of approximate feature points have the same positional relationship. Approximate feature points associated in this way are determined to be corresponding points.

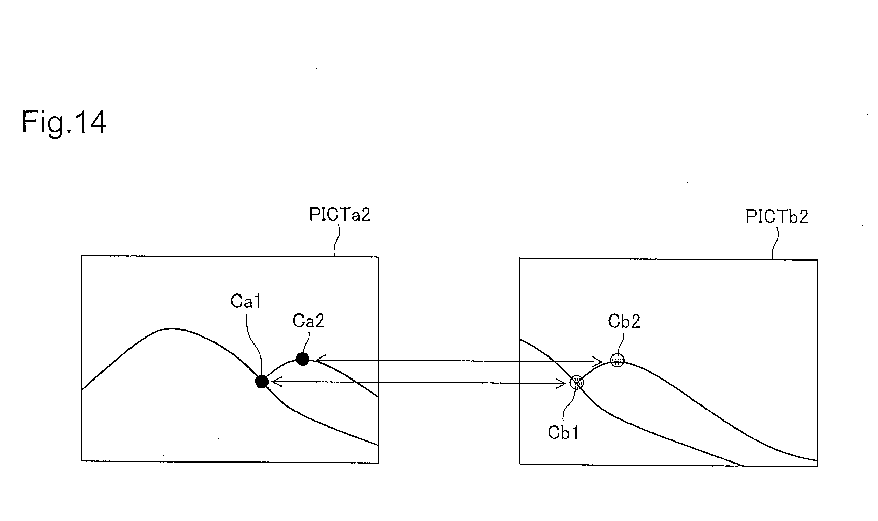

FIG. 14 is an illustration showing the corresponding point search process being carried out. The feature point data PICTa2 includes two feature points Ca1, Ca2, and the feature point data PICTb2 includes two feature points Cb1, Cb2. Feature point Ca1 an d feature point Cb1 represent the same subject, and thus the surrounding pixels have approximate pixel values. As a result, feature point Ca1 and feature point Ca2 will be found to be corresponding approximate feature points. Similarly, feature point Ca2 and feature point Cb2 will be found to be corresponding approximate feature points.

In feature point data PICTa2, there is recognized a positional relationship whereby approximate feature point Ca2 is positioned to the upper right of approximate feature point Ca1. On the other hand, in feature point data PICTb2, approximate feature point Cb2, which approximates approximate feature point Ca2, is positioned to the upper right of approximate feature point Cb1, which approximates approximate feature point Ca 1. In this way, it is ascertained that the in each set of feature point data PICTa2, PICTb2, a plurality of approximate feature points have the same positional relationship. It can therefore be determined that feature point Ca1 of feature point data PICT a2 corresponds to feature point Cb1 of feature point data PICTb2, and that feature point Ca2 of feature point data PICTa2 corresponds to feature point Cb2 of feature point data PICTb2.

In Step S150, the CPU 231 performs a synthesis process of two sets of cylindrical graphics data. The synthesis process is a process for synthesizing multiple sets of graphics data in such a way that corresponding feature points align.

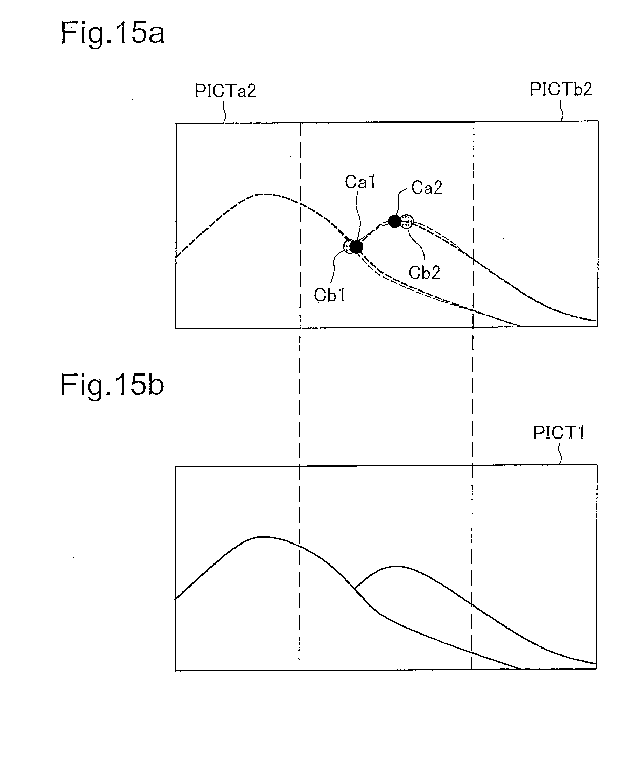

FIGS. 15(a) and 15(b) are illustrations giving a description of the synthesis process. The synthesis process is carried out by determining the positional relationship of two images in such a way that corresponding feature points are positioned in proximity, and the subjecting each image to localized deformation so that positions of correspond ing feature points align.

FIG. 15(a) shows two sets of feature point data PICTa2, PICTb2 arranged so that corresponding feature points are positioned in proximity. In this example, feature point Ca1 belonging to feature point data PICTa2 is located just to the right of feature point Cb1 belonging to feature point data PICTb2. Feature point Ca2 belonging to feature point data PICTa2 is located just to the left of feature point Cb2 belonging to feature point data PICTb2.

In this embodiment, this placement is due to the fact that the distance between feature point Ca1 and feature point Ca2 is smaller than the distance between feature point Cb1 and Cb2, due to distortion of the images. The presence of distortion in each image is due to the fact that, while the image distortion shown in FIG. 10 has been suppressed, there is residual distortion due to lens aberration. Where it is assumed that each image will have some distortion in this way, it is preferable to determine relative positions of the two images s o as to minimize the squares of the distances between corresponding points, for example.

Next, positional relationships of corresponding points are generated as vector data. This vector data is used during localized affine conversion of graphics data such that corresponding points align. One cylindrical image synthesized in this way is depicted in FIG. 15(b). By "unrolling" this cylindrical image in the lateral direction, a seamless planar image can be generated (Step S160).

In this way, in this embodiment, by synthesizing an image in a cylindrical coordinate system that reproduces the positional relationship between the optical system and the image pickup device when graphics data is generated in the digital still camera 12, since image distortion in the lateral direction of the image occurring when an image is generated using a planar image pickup device at a given focal distance is reduced, it is possible to suppress degradation in image quality produced during the process of synthesizing multiple set s of graphics data created using the image pickup device.

The functions of the focal distance determiner, the synthesis area establisher, the spheroidal image generator, the feature point extractor, the correspondence relationship determiner, the spheroidal image synthesizer, and the planar image generator recited in the claims are carried out by the CPU 231.

### D. Panorama Synthesis Process in the second embodiment:

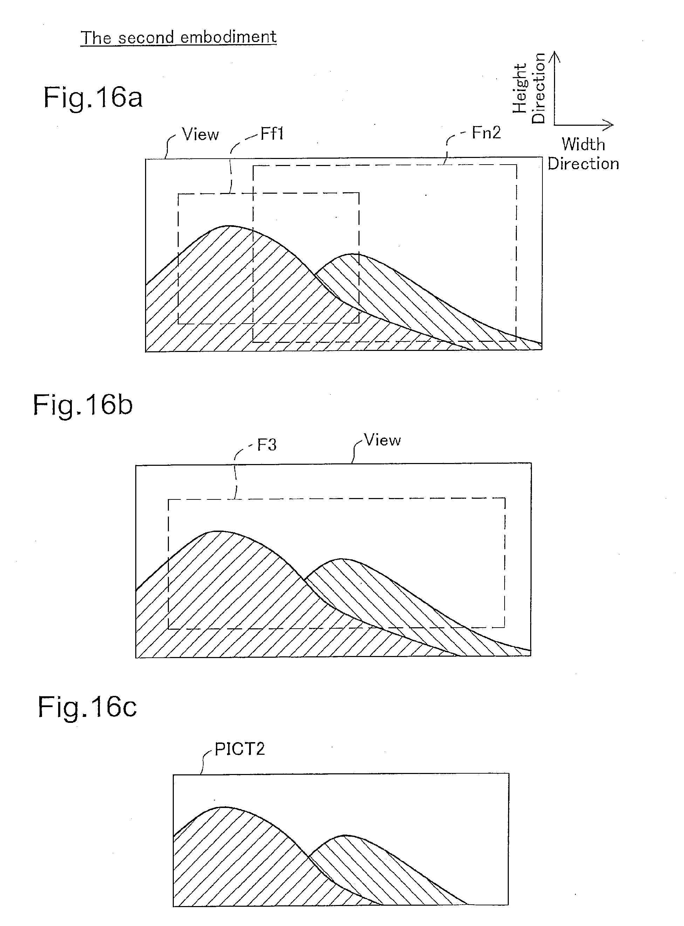

FIGS. 16(a), 16(b), and 16(c) are illustrations depicting graphics data representing a single seamless image being generated from two sets of graphics data having different focal distances. The two sets of graphics data are the graphics data generated by means of shooting the two frames Ff1, Fn1 shown in FIG. 16(a). The reason that the two fra mes Ffl, Fn1 differ in size (angle of field) is that the focal distance has been changed by means of a zoom operation or changing lenses. Specifically, the graphics data of frame Ffl has been generated at a relatively long focal distance, and the graphics data of frame Fn1 has been generated at a relatively short focal distance.

FIG. 16(b) shows one graphics data frame F3 generated from two sets of graphics data. The size of frame F3 has image width generated by synthesizing the two frames Ffl, Fn1, with the height of the frame Ff1 which, of the two frames Ffl, Fn1, has the longer focal distance (smaller angle of field) being trimmed. FIG. 16(c) shows a seamless planar image PICT2 generated to have the frame F3 determined in this way.

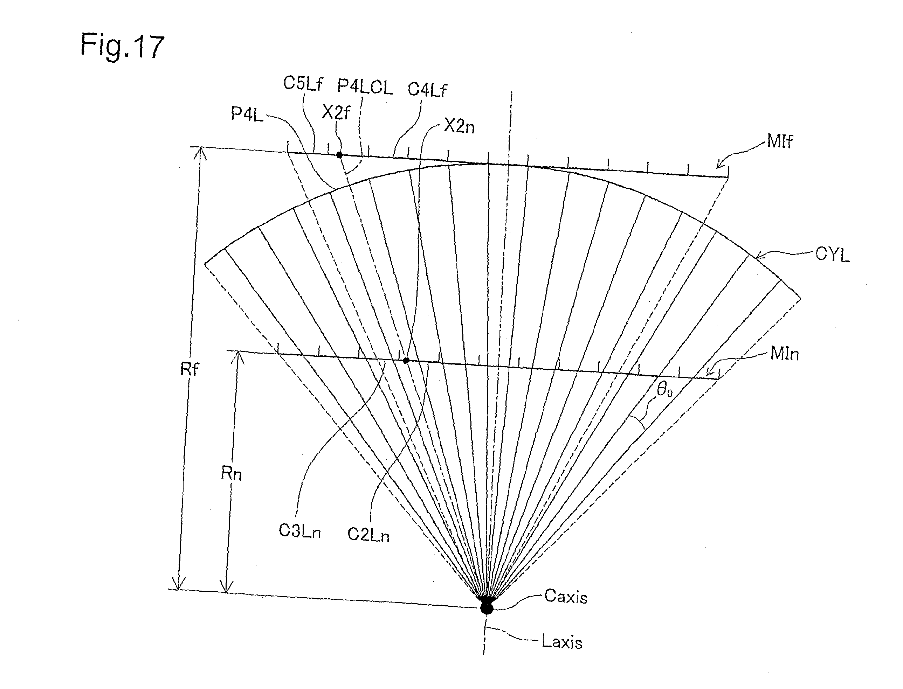

FIG. 17 is an illustration depicting generation of two sets of cylindrical graphics data from two sets of graphics data having different focal distances. Planar RGB data MIn is data generated by shooting the frame Fn1. Planar RGB data MIf is data generated by shooting the frame Ffl (FIG. 16(a)). The planar RGB data MIn and the planar RGB data MIf are positioned away from the cylindrical coordinate system axis Caxis in the optical axis Laxis direction, by a focal distance Rn and a focal distance Rf, respectively. The foca 1 distance Rn and focal distance Rf are values for lens focal distance read from the Exif IFD of each graphics file GF.

The projection plane CYL on the cylindrical coordinate system is a projection plane established with the cylindrical coordinate system axis Caxis as its center, and having a radius equal to the focal distance Rf. The focal distance Rf is the longer of the two different focal distances established by shooting the two sets of planar RGB data MIn, MIf. The angle θ ₀ representing the cylindrical pixel width is established by a method similar to that of the first embodiment (FIG. 9(a)), on the basis of the planar pixels (not shown) of the planar RGB data MIf.

The reason that the cylindrical pixel angle θ ₀ is established on the basis of the planar pixels of the planar RGB data MIf is that if it were based on the planar RGB data MIn, the cylindrical pixel angle θ₀ would be excessive with respect to the planar RGB data MIf, and information belonging to the planar RGB data MIf would be lost. On the other hand, if the cylindrical pixel angle θ₀ were made smaller than this, the amount of data of the cylindrical image would become excessive with respect to information belonging to the planar RGB data MIf, MIn.

The pixel value of the cylindrical pixe 1 P4L can be calculated as follows from pixel values of planar pixels of the planar RGB data MIf, MIn, in the same manner as in the first embodiment. The cylindrical image pixel P4L generated by converting the planar RGB data MIf is calculated from two pixels C4Lf, C5Lf of the planar RGB data MIf. Meanwhile, the cylindrical image pixel P4L generated by converting the planar RGB data MIn is calculated from two pixels C2Ln, C3Ln of the planar RGB data MIn. In this way, the invention is applicable to case s in which a panorama synthesis process is carried out on two sets of graphics data having different focal distances.

### E. Variations

The invention is not limited to the embodiments and embodiments set forth hereinabove, and may be reduced to practice in various other modes without departing from the spirit thereof, such as the following variations, for example.
E-1. Whereas in the embodiments hereinabove, a single seamless planar image is generated by unrolling cylindrical image data that has been arranged on a projection plane having a cylindrical shape, a single seamless planar image could instead be generated by means of projecting onto a plane graphics data that has been composed on a projection plane having a cylindrical shape or a spheroidal shape. Generally, the planar image generator used in the present invention may be any arrangement that generates graphics data representing a seamless planar image, from graphics data such as spheroidal graphics data or cylindrical graphics data.
E-2. Whereas in the embodiments hereinabove, coordinate conversion to a cylindrical coordinate system employs lens focal distance stored in the EXIF IFD of each graphics file GF, it would instead be possible to effect coordinate conversion to a cylindrical coordinate system using 35 mm-equivalent lens focal distance stored in the EXIF IFD of each graphics file GF, for example.
   In this case, planar pixel size of planar RGB data can be determined depending on 35 mm film size and pixel count. Specifically, pixel height can b e calculated by dividing the length in the height direction of 35 mm film size by the pixel count, and pixel width can be calculated by dividing the length in the width direction of 35 mm film size by the pixel count.
E-3. Whereas in the embodiments herein above, the panorama synthesis process is carried out after the YCbCr data has been converted to RGB data, it would instead be possible to carry out the panorama synthesis process is carried out before the YCbCr data has been converted to RGB data. In this latter case, there could be employed an arrangement in which the feature point extraction and the corresponding point search are carried out exclusively on the basis of luminance information to which the human eye is highly sensitive, for example. By so doing, a resultant advantage is the ability to achieve a panorama synthesis process with a minimal amount of calculation, without excessive degradation of image quality.
E-4. Whereas in the embodiments hereinabove, a personal computer functions as the image processing apparatus, it would instead by possible for the color printer or the digital still camera to have the function of an image processing apparatus. Also, the invention is not limited to color printing only, but is applicable to monochrome printing as well.
E-5. Whereas in the embodiments hereinabove, an ink -jet color printer is used as the output apparatus, the invention is applicable also in instances where a monitor such as a CRT display or LCD display, a projector, or some other apparatus able to display images is used as an output apparatus.

Where some or all of the functions of the present invention are realized through software, the software (computer program) may be provided in a form stored on a computer -readable recording medium. In the present invention, "computer-readable recording medium" is not limited to portable recording media such as flexible disks and CD -ROM, but includes also various flavors of RAM, ROM, and other computer internal storage apparatus, as well as hard disks and other external storage apparatus fixed in a computer.

### INDUSTRIAL APPLICABILITY

This invention is applicable to computer output apparatus.

## Claims

1. An image processing apparatus for generating graphics data representing a single seamless planar image synthesized from a multiple sets of graphics data contained in a plurality of graphics files, in response to the plurality of graphics files each of which contains the graphics data composed of a multiplicity of planar pixels arrayed in a plane for representing a planar image, the image processing apparatus comprising:
a synthesis area establisher configured to establish a spheroidal projection plane centered on a predetermined point, as an area for synthesis of the multiple sets of graphics data;
a spheroidal image generator configured to generate a plurality of spheroidal images, by projecting each of planar images represented by each of the multiple sets of graphics data onto the projection plane;
a feature point extractor configured to extract a feature point which is an area having a predetermined characteristic, from each of the plurality of spheroidal images;
a correspondence relationship determiner configured to determine a correspondence relationship of the extracted feature points , between the plurality of spheroidal images ;
a spheroidal image synthesizer configured to generate seamless spheroidal graphics data representing a single seamless spheroidal image , by synthesizing a plurality of graphics data each of which representing each of the spheroidal images, with reference to the determined correspondence relationship; and
a planar image generator configured to generate the graphics data representing the single seamless planar image, from the seamless spheroidal image graphics data.

2. The image processing apparatus in accordance with claim 1, wherein
the plurality of graphics files further include image attribute information which is attribute information of the graphics data , wherein
the image processing apparatus further comprises a focal distance determiner configured to determine a focal distance of an optical system used to generate the multiple sets of graphics data for each of the multiple set of graphics data, in response to the image attribute information; and
the spheroidal image generator generates the plurality of spheroidal images by project ing each planar image represented by each of the multiple sets of graphics data onto the projection plane, the each planar images being placed at a location away from the predetermined point to the projection plane side, by the focal distance corresponding to each of the multiple sets of graphics data.

3. The image processing apparatus in accordance with any of claims 1 and 2 , wherein
the image attribute information includes lens focal dist ance representing focal distance of a shooting lens; focal plane resolution unit specifying an unit of resolution in a focal plane of the optical system; focal plane height resolution representing a pixel count in a pixel height direction per the focal plane resolution unit; and focal plane width resolution representing a pixel count in a pixel width direction per the focal plane resolution unit;
the focal distance determiner determines the lens focal distance to be the focal distance; and
the spheroidal image generator determines a pixel size in a width direction by means of dividing the focal plane resolution unit by focal plane width resolution, and also determines a pixel size in a height direction by means of dividing the focal plane resolution unit by the focal plane height resolution.

4. The image processing apparatus in accordance with any of claim s1 and 2, wherein
the image attribute information includes 35 mm -equivalent lens focal distance which is a value of focal distance converted to a 35 m m film camera basis;
the focal distance determiner determine s the 35 mm-equivalent lens focal distance to be the focal distance; and
the spheroidal image generator determines 35 mm film size as a size of the planar image.

5. The image processing apparatus in accordance with any of claims 1 to 4 , wherein
the image attribute information includes focal plane resolution unit specifying an unit of resolution in a focal plane of the optical system; focal plane height resolution representing a pixel count in a pixel height direction per the focal plane resolution unit; and focal plane width resolution representing a pixel count in a pixel width direction per the focal plane resolution unit;
the spheroidal image generator comprises:
a spheroidal pixel establi sher configured to establish spheroidal pixels on the spheroidal projection plane, the spheroidal pixel being allocated in a height direction by an angle divided by a largest one of the determined focal distances and the focal plane height resolution, and also being allocated in a width direction by an angle divided by the largest determined focal distance and the focal plane width resolution; and
a spheroidal pixel value determiner configured to determine each pixel value for each of the spheroidal pixels, according to a pixel value of a planar pixel projected onto each of the spheroidal pixels.

6. An image processing apparatus for generating graphics data representing a single seamless planar image synthesized from a multiple sets of graphics data contained in a plurality of graphics files, in response to the plurality of graphics files each of which contains the graphics data composed of a multiplicity of planar pixels arrayed in a plane for representing a planar image, the image processing apparatus co mprising:
a synthesis area establisher configured to establish a cylindrical projection plane centered on a predetermined axis, as an area for synthesis of the multiple sets of graphics data;
a cylindrical image generator configured to generate a plurality of cylindrical images, by projecting each of planar images represented by each of the multiple sets of graphics data onto the projection plane;
a feature point extractor configured to extract a feature point which is an area having a predetermined characteristic, from each of the plurality of cylindrical images;
a correspondence relationship determiner configured to determine a correspondence relationship of the extracted feature points , between the plurality of cylindrical images;
a cylindrical image synthesizer configured to generate seamless cylindrical graphics data representing a single seamless cylindrical image , by synthesizing a plurality of graphics data each of which representing each of the cylindrical images, with reference to the determine d correspondence relationship; and
a planar image generator configured to generate the graphics data representing the single seamless planar image, from the seamless cylindrical image graphics data.

7. The image processing apparatus in accordance with claim 6, wherein
the plurality of graphics files further include image attribute information which is attribute information of the graphics data , wherein
the image processing apparatus further comprises a focal distance determiner configured to determine a focal distance of an optical system used to generate the multiple sets of graphics data for each of the multiple set of graphics data, in response to the image attribute information; and
the axis image generator generates the plurality of axis images by projecting each planar image represented by each of the multiple sets of graphics data onto the projection plane, the each planar images being placed at a location away from the predetermined axis to the projection plane side, by the focal distance corresponding to each of the multiple sets of graphics data.

8. The image processing apparatus in accordance with any of claims 6 and 7 , wherein
the cylindrical image generator establishes the axis parallel to the height direction established in the graphics data.

9. The image processing apparatus in accordance with any of claims 6 to 8 , wherein
the image attribute information includes lens focal distance representing focal distance of a shooting lens; focal plane resolution unit specifying an unit of resolution in a focal plane of the optical system; focal plane height resolution representing a pixel count in a pixel height direction per the focal plane resolution unit; and focal plane width resolution representing a pixel count in a pixel width direction per the focal plane resolution unit;
the focal distance determiner determines the lens focal distance to be the focal distance; and
the cylindrical image generator determines a pixel size in a width direction by means of dividing the focal plane resolution unit by focal plane width resolution, and also determines a pixel size in a height direction by means of dividing the focal plane resolution unit by the focal plane height resolution.

10. The image processing apparatus in accordance with any of claims 6 to 8, wherein
the image attribute information includes 35 mm -equivalent lens focal distance which is a value of focal distance converted to a 35 mm film camera basis;
the focal distance determiner determine s the 35 mm-equivalent lens focal distance to be the focal distance; and
the cylindrical image generator determines 35 mm film size as a size of the planar image.

11. The image processing apparatus in accordance with any of claims 6 to 10 , wherein
the image attribute information includes focal pla ne resolution unit specifying an unit of resolution in a focal plane of the optical system; focal plane height resolution representing a pixel count in a pixel height direction per the focal plane resolution unit; and focal plane width resolution represent ing a pixel count in a pixel width direction per the focal plane resolution unit;
the cylindrical image generator comprises:
a cylindrical pixel establisher configured to establish cylindrical pixels on the cylindrical projection plane, the cylindrical pixel being allocated in a height direction by an angle divided by a largest one of the determined focal distances and the focal plane height resolution, and being allocated in a width direction by an angle divided by the largest determined focal distance and the focal plane width resolution; and
a cylindrical pixel value determiner configured to determine each pixel value for each of the cylindrical pixels, according to a pixel value of a planar pixel projected onto each of the cylindrical pixels.

12. An image processing method of generating graphics data representing a single seamless planar image synthesized from a multiple sets of graphics data contained in a plurality of graphics files, in response to the plurality of graphics files each of which contains the graphics data composed of a multiplicity of planar pixels arrayed in a plane for representing a planar image, the image processing method comprising the steps of:
(a) establishing a spheroidal projection plane centered on a predetermined point, a s an area for synthesis of the multiple sets of graphics data;
(b) generating a plurality of spheroidal images, by projecting each of planar images represented by each of the multiple sets of graphics data onto the projection plane;
(c) extracting a feature point which is an area having a predetermined characteristic, from each of the plurality of spheroidal images;
(d) determining a correspondence relationship of the extracted feature points , between the plurality of spheroidal images;
(e) generating seamless spheroidal graphics data representing a single seamless spheroidal image, by synthesizing a plurality of graphics data each of which representing each of the spheroidal images, with reference to the determined correspondence relationship; and
(f) generating the graphics data representing the single seamless planar image, from the seamless spheroidal image graphics data.

13. An image processing method of generating graphics data representing a single seamless planar image synthesized from a multiple sets of graphics data contained in a plurality of graphics files, in response to the plurality of graphics files each of which contains the graphics data composed of a multiplicity of planar pixels arrayed in a plane for representing a planar image, the image processing method comprising the steps of:
(a) establishing a cylindrical projection plane centered on a predetermined axis, as an area for synthesis of the multiple sets of graphics data;
(b) generating a plurality of cylindrical images, by projecting each of planar images represented by each of the multiple sets of graphics data onto the projection plane;
(c) extracting a feature point which is an area having a predetermined characteristic, from each of the plurality of cylindrical images;
(d) determining a correspondence relationship of the extracted feature points , between the plurality of cylindrical images;
(e) generating seamless cylindrical graphics data representing a single seamless cylindrical image, by synthesizing a plurality of graphics data each of which representing each of the cylindrical images, with reference to the determined correspondence relationship; and
(f) generating the graphics data representing the single seamless planar image, from the seamless cylindrical image graphics data.

14. A computer program product for causing a computer to generate graphics data representing a single seamless planar image synthesized from a multiple sets of graphics data contained in a plurality of graphics files, in response to the plurality of graphics files each of which contains the graphics data composed of a multiplicity of planar pixels arrayed in a plane for representing a planar image, the computer program product comprising:
a computer readable medium; and
a computer program stored on the computer readable medium, the computer program comprising:
a first program for causing the computer to establish a spheroidal projection plane centered on a predetermined point, as an area for synthesis of the multiple sets of graphic s data;
a second program for causing the computer to generate a plurality of spheroidal images, by projecting each of planar images represented by each of the multiple sets of graphics data onto the projection plane;
a third program for causing the computer to extract a feature point which is an area having a predetermined characteristic, from each of the plurality of spheroidal images;
a fourth program for causing the computer to determine a correspondence relationship of the extracted feature points, between the plurality of spheroidal images ;
a fifth program for causing the computer to generate seamless spheroidal graphics data representing a single seamless spheroidal image , by synthesizing a plurality of graphics data each of which representing each of the spheroidal images, with reference to the determined correspondence relationship; and
a sixth program for causing the computer to generate the graphics data representing the single seamless planar image, from the seamless spheroidal image graphics data.

15. A computer program product for causing a computer to generate graphics data representing a single seamless planar image synthesized from a multiple sets of graphics data contained in a plurality of graphics files, in response to the plurality of graphics files each of which contains the graphics data composed of a multiplicity of planar pixels arrayed in a plane for representing a planar image, the computer program product comprising:
a computer readable medium; and
a computer program stored on the computer readable medium, the computer program comprising:
a first program for causing the computer to establish a cylindrical projection plane centered on a predetermined axis, as an area for synthesis of the multiple sets of graphics dat a;
a second program for causing the computer to generate a plurality of cylindrical images, by projecting each of planar images represented by each of the multiple sets of graphics data onto the projection plane;
a third program for causing the computer to extract a feature point which is an area having a predetermined characteristic, from each of the plurality of cylindrical images;
a fourth program for causing the computer to determine a correspondence relationship of the extracted feature points, between the plurality of cylindrical images;
a fifth program for causing the computer to generate seamless cylindrical graphics data representing a single seamless cylindrical image , by synthesizing a plurality of graphics data each of which representing each of the cylindrical images, with reference to the determined correspondence relationship; and
a sixth program for causing the computer to generate the graphics data representing the single seamless planar image, from the seamless cylindrical image graphic s data.
